# EUROPÄISCHE PATENTSCHRIFT

(11) **EP 1 639 316 B1**
(45) Veröffentlichungstag und Bekanntmachung des Hinweises auf die Patenterteilung: **20.01.2010**
(21) Anmeldenummer: 04741685.4
(22) Anmeldetag: 01.06.2004
(51) Int. Cl.: G01C 19/56, G01P 9/04, G01P 15/10, G01P 21/00

(54) **VERFAHREN ZUR ÜBERWACHUNG EINES VIBRATIONSKREISELS**
METHOD FOR MONITORING A VIBRATING GYROSCOPE
PROCEDE DE CONTROLE D'UN GYROSCOPE VIBRANT

(30) Priorität: 30.06.2003 DE 10329508
(43) Veröffentlichungstag der Anmeldung: 29.03.2006
(73) Patentinhaber: Continental Automotive GmbH, 30165 Hannover (DE)
(72) Erfinder: MORELL, Heinz-Werner, 67659 Kaiserslautern (DE); SCHMID, Dietmar, 65606 Villmar (DE)
(86) Internationale Anmeldenummer: PCT/EP2004/050970
(87) Internationale Veröffentlichungsnummer: WO 2005/001379

(56) Entgegenhaltungen:
- PATENT ABSTRACTS OF JAPAN Bd. 1997, Nr. 12, 25. Dezember 1997 (1997-12-25) -& JP 09 218040 A (NISSAN MOTOR CO LTD), 19. August 1997 (1997-08-19)

## Beschreibung

Die Erfindung betrifft ein Verfahren zur Überwachung eines Vibrationskreisels, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird.

Beispielsweise aus EP 0 461 761 B1 sind Drehratensensoren bekannt geworden, bei welchen ein Vibrationskreisel in zwei gegenüber einer Hauptachse radial ausgerichteten Achsen angeregt wird, wozu ein primärer und ein sekundärer Regelkreis mit entsprechenden Wandlern an dem Vibrationskreisel vorgesehen sind. Werden derartige Drehratensensoren in Fahrzeugen zur Stabilisierung der Fahrzeugbewegung eingesetzt, so können durch Ausfall oder fehlerhafte Funktion Gefährdungen auftreten. Um diese zu vermeiden, ist eine Funktionsüberwachung des Drehratensensors erforderlich. Dabei ist zu berücksichtigen, dass der Vibrationskreisel in einem evakuierten Gehäuse angeordnet ist, um eine geringstmögliche Dämpfung zu erzielen, und dass durch Alterung oder einen Defekt Luft in das Gehäuse eindringen kann, was die Brauchbarkeit des Vibrationskreisels vermindert bzw. ausschließt.

Eine solche Überwachung wird bei JP 09-218040 A dadurch bewirkt, dass die Güte des Resonators gemessen wird und dass bei einer Güte unterhalb eines Schwellwertes eine Fehlermeldung erzeugt wird. Zur Messung der Güte wird dabei das Erregersignal abgeschaltet und die Amplitude des abklingenden Ausgangssignals zur Erzeugung der Fehlermeldung ausgewertet. Das bekannte Verfahren ist im Wesentlichen dafür geeignet, einen Test bei stehendem Fahrzeug durchzuführen, beispielsweise jeweils nach Einschalten der Zündung oder bei der Überprüfung des Drehratensensors im Rahmen der Herstellung.

Das erfindungsgemäße Verfahren eignet sich auch für eine Prüfung während des Betriebes und besteht darin, dass in den Regelkreis vorübergehend eine zusätzliche Phasendrehung des Erregersignals eingefügt wird und dass eine dadurch bedingte Frequenzänderung ausgewertet wird. Es hängt vom Einzelfall ab, ob eine vorübergehende Phasendrehung des Erregersignals bzw. eine vorübergehende Frequenzänderung eine Auswertung des Drehratensignals für den jeweils vorgesehenen Zweck stört.

Eine vorteilhafte Ausgestaltung der Erfindung eignet sich für eine digitale Realisierung des Regelkreises insbesondere dadurch, dass das Ausgangssignal nach Verstärkung und Analog/Digital-Wandlung in eine Inphase-Komponente und eine Quadratur-Komponente demoduliert wird, dass die Quadratur-Komponente nach Filterung einen Träger moduliert, der als Erregersignal dem Vibrationskreisel zugeführt wird, dass die Inphase-Komponente nach Filterung einer PLL-Schaltung zugeführt wird, welche die Frequenz und Phase des Trägers regelt, dass zur Phasendrehung des Erregersignals ein der Frequenzänderung entsprechendes Signal der PLL-Schaltung zugeführt wird, das eine Phasenänderung des Trägers bewirkt.

Die Erfindung kann vorzugsweise derart ausgestaltet sein, dass die Phasendrehung etwa 10° bezogen auf den Träger ist.

Die Erfindung lässt zahlreiche Ausführungsbeispiele zu. Eines davon ist schematisch in der Zeichnung anhand mehrerer Figuren dargestellt und nachfolgend beschrieben. Es zeigt:
- Fig. 1:: ein Blockschaltbild eines Drehratensensors,
- Fig. 2:: Zeitdiagramme von Signalen bei dem Ausführungs- beispiel und
- Fig. 3:: ein Blockschaltbild eines zur Durchführung eines Verfahrens nach dem Ausführungsbeispiel ausgebil- deten Drehratensensors.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

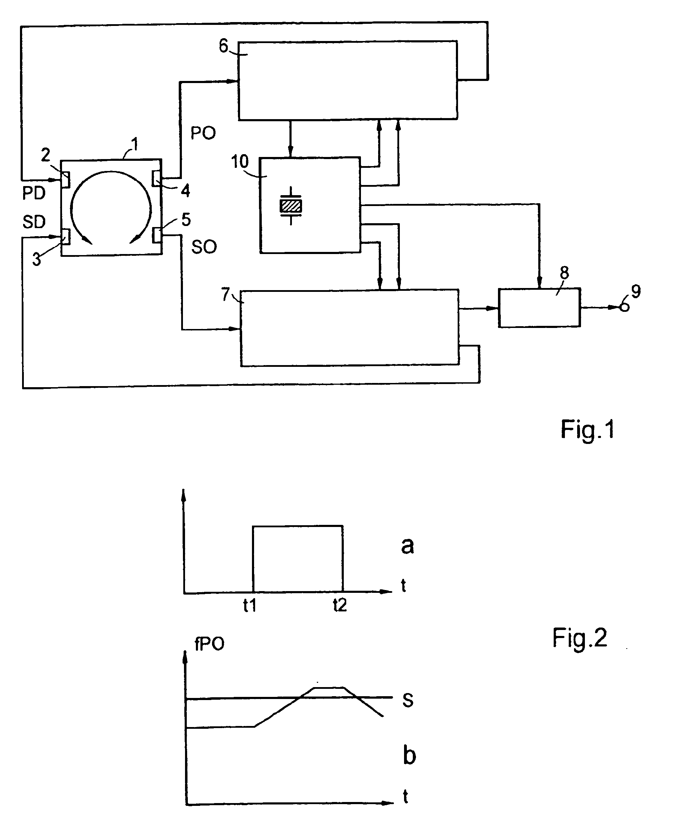

Fig. 1 zeigt ein Blockschaltbild einer Anordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises 7 ist. Der primäre Regelkreis 6 dient zur Anregung von Schwingungen mit der Resonanzfrequenz des Vibrationskreisels von beispielsweise 14 kHz. Die Anregung erfolgt dabei in einer Achse des Vibrationskreisels, zu welcher die für den sekundären Regelkreis benutzte Schwingungsrichtung um 90° versetzt ist. Im sekundären Regelkreis 7 wird das Signal SO in zwei Komponenten aufgespalten, von denen eine über ein Filter 8 einem Ausgang 9 zugeleitet wird, von welchem ein der Drehrate proportionales Signal abnehmbar ist.

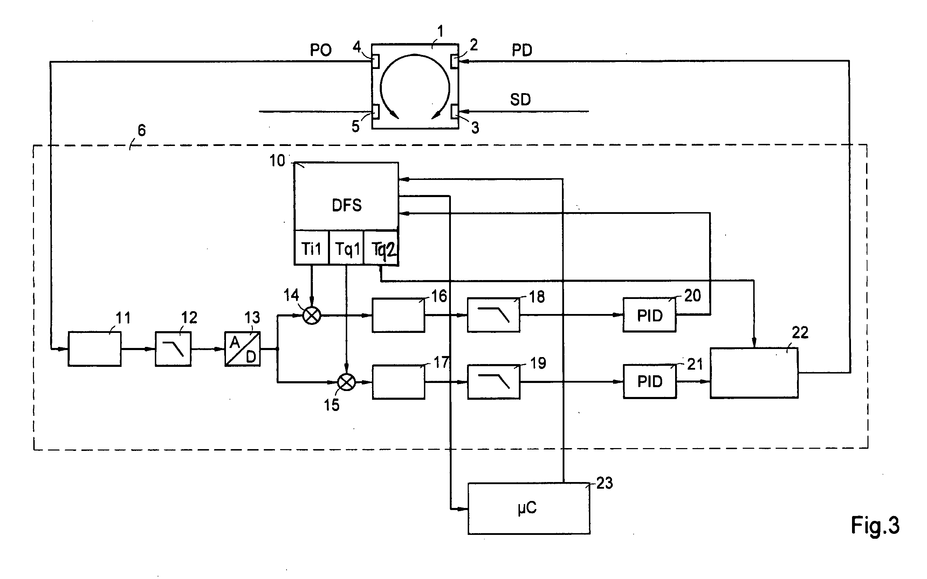

In beiden Regelkreisen 6, 7 erfolgt ein wesentlicher Teil der Signalverarbeitung digital. Die zur Signalverarbeitung erforderlichen Taktsignale werden in einem quarzgesteuerten digitalen Frequenzsynthesizer 10 erzeugt, dessen Taktfrequenz im dargestellten Beispiel 14,5 MHz beträgt. Für die Anwendung des erfindungsgemäßen Verfahrens kommt im Wesentlichen der primäre Regelkreis in Frage, weshalb in den Figur 3 ein Ausführungsbeispiel für den primären Regelkreis dargestellt ist.

Bei dem Ausführungsbeispiel wird mit einem in Fig. 2a gezeigten Schaltsignal eine zusätzliche Phasendrehung zwischen den Zeitpunkten t1 und t2 eingeführt. Um die Resonanabedingungen zu erhalten, reagiert der Regelkreis mit einer Änderung der Frequenz fPO, was in Fig. 2b dargestellt ist. Überschreitet dabei die Frequenzänderung einen Schwellwert S, ist die Güte des Vibrationskreisels hoch genug. Ändert sich dagegen die Frequenz weniger, so ist eine hohe Dämpfung vorhanden, so dass eine Fehlermeldung ausgelöst wird.

Der in Figur 3 dargestellte primäre Regelkreis weist einen Verstärker 11 für das Ausgangssignal PO auf, an den sich ein Anti-Alias-Filter 12 und ein Analog/Digital-Wandler 13 anschließen. Mit Hilfe von Multiplizierern 14, 15, denen Träger Ti1 und Tq1 zugeführt werden, erfolgt eine Aufspaltung in eine Inphase-Komponente und eine Quadratur-Komponente. Beide Komponenten durchlaufen anschließend je ein (sinx/x)-Filter 16, 17 und ein Tiefpaßfilter 18, 19. Der gefilterte Realteil wird einem PID-Regler 20 zugeführt, der den digitalen Frequenzsynthesizer steuert, wodurch eine Phasenregelschaltung geschlossen wird, welche die richtige Phasenlage der Träger Ti1 und Tq1 bewirkt. Außerdem wird ein Träger Tq2 erzeugt, der in einer Schaltung 22 mit dem Ausgangssignal eines weiteren PID-Reglers 21 moduliert wird, der den tiefpaßgefilterten Imaginärteil erhält. Das Ausgangssignal der Schaltung 22 wird dem Eingang 2 des Vibrationskreisels 1 als Erregersignal PD zugeführt.

Ein Mikrocomputer 23 steuert neben anderen Vorgängen die zur Durchführung des erfindungsgemäßen Verfahrens erforderlichen Maßnahmen. Dazu leitet der Mikrocomputer 23 ein Signal entsprechend Fig. 2a an den Frequenzsynthesizer, der eine zusätzliche Phasenverschiebung vornimmt. Die Reaktion des Phasen-Regelkreises besteht darin, dass der Frequenzsynthesizer eine andere Teilung aus der Taktfrequenz wählt, um die Frequenz der Träger zu verändern. Dies kann als Maß für die Frequenzabweichung dem Mikrocomputer 23 zugeführt werden, der dann die im Zusammenhang mit Fig. 2 erläuterte Auswertung vornimmt.

## Patentansprüche

1. Verfahren zur Überwachung eines Vibrationskreisels, der einen Resonator darstellt und Teil mindestens eines Regelkreises ist, der den Vibrationskreisel durch Zuführung eines Erregersignals mit seiner Eigenfrequenz erregt, wobei dem Vibrationskreisel ein Ausgangssignal entnehmbar ist, aus dem durch Filterung und Verstärkung das Erregersignal abgeleitet wird, und wobei die Güte des Resonators gemessen wird und dass bei einer Güte unterhalb eines Schwellwertes eine Fehlermeldung erzeugt wird, **dadurch gekennzeichnet, dass** in den Regelkreis vorübergehend eine zusätzliche Phasendrehung des Erregersignals eingefügt wird und dass eine **dadurch** bedingte Frequenzänderung ausgewertet wird, wobei die Güte des Vibrationskreisels hoch genug ist, wenn die Frequenzänderung einen Schwellenwert überschreitet, und eine Fehlermeldung ausgelöst wird, wenn die Frequenzänderung unter diesem Schwellwert liegt.

2. Verfahren nach Anspruch 1, **dadurch gekennzeichnet, dass** das Ausgangssignal nach Verstärkung und Analog/DigitalWandlung in eine Inphase-Komponente und eine Quadratur-Komponente demoduliert wird, dass die Quadratur-Komponente nach Filterung einen Träger moduliert, der als Erregersignal dem Vibrationskreisel zugeführt wird, dass die Inphase-Komponente nach Filterung einer PLL-Schaltung zugeführt wird, welche die Frequenz und Phase des Trägers regelt, dass zur Phasendrehung des Erregersignals ein der Frequenzänderung entsprechendes Signal der PLL-Schaltung zugeführt wird, das eine Phasenänderung des Trägers bewirkt.

3. Verfahren nach Anspruch 2, **dadurch gekennzeichnet, dass** die Phasendrehung etwa 10° bezogen auf den Träger ist.

## Claims

1. Method for monitoring a vibration gyro, which represents a resonator and is part of at least one control loop which excites the vibration gyro by supplying an excitation signal at its natural frequency, in which case an output signal can be tapped off from the vibration gyro, from which the excitation signal is derived by filtering and amplification, and in which the Q-factor of the resonator is measured, and in that a fault message is produced if the Q-factor is below a threshold value, **characterized in that** an additional phase shift of the excitation signal is inserted temporarily into the control loop, and **in that** any frequency change caused by this is evaluated, the Q-factor of the vibration gyro being high enough when the frequency change is above threshold value and a fault message being triggered when the frequency change is below this threshold value.

2. Method according to Claim 1, **characterized in that**, after amplification and analog/digital conversion, the output signal is demodulated to an in-phase component and a quadrature component, **in that** the quadrature component modulates a carrier, after filtering, which carrier is supplied as an excitation signal to the vibration gyro, **in that** the in-phase component is supplied, after filtering, to a PLL circuit, which controls the frequency and the phase of the carrier, **in that** a signal which corresponds to the frequency change is supplied to the PLL circuit in order to shift the phase of the excitation signal, and causes a phase change in the carrier.

3. Method according to Claim 2, **characterized in that** the phase shift is approximately 10° with respect to the carrier.

## Revendications

1. Procédé permettant de contrôler un gyroscope à vibrations qui constitue un résonateur est fait partie de au moins un circuit de régulation, lequel excite le gyroscope à vibrations en lui appliquant un signal d'excitation ayant sa fréquence propre, où il est possible de prélever du gyroscope à vibrations un signal de sortie à partir duquel le signal d'excitation est obtenu par filtrage est amplification et où la qualité du résonateur est mesurée et où, lorsque la qualité est inférieure à une valeur seuil, on message de dérangement est généré, **caractérisé par le fait que**, dans le circuit de régulation, une rotation de phase supplémentaire du signal d'excitation est ajoutée temporairement est qu'une variation de la fréquence qui en résulte est analysée, la qualité du gyroscope à vibrations étant suffisamment élevée lorsque la variation de la fréquence dépasse une valeur seuil et un message de dérangement étant déclenché lorsque la variation de la fréquence est inférieure à cette valeur seuil.

2. Procédé selon la revendication 1, **caractérisé par le fait que** le signal de sortie, après une amplification et une conversion analogique est démodulé en une composante en phase et une composante en quadrature, que la composante en quadrature, après filtrage, module une porteuse qui est appliquée, en tant que signal d'excitation, au gyroscope à vibrations, que la composante en phase, après filtrage, est appliquée à un circuit à verrouillage de phase (ou circuit PLL, pour "Phase Locked Loop" glais), lequel règle la fréquence et la phase de la porteuse, que, pour la rotation de phase du signal d'excitation, un signal correspondant à la variation de fréquence est appliqué au circuit à verrouillage de phase qui provoque une variation de phase de la porteuse.

3. Procédé selon la revendication 2, **caractérisé par le fait que** la rotation de phase s'élève, par rapport à la porteuse, à environ 10°.
